(19) Europäisches Patentamt

European Patent Office

Office européen des brevets

(11) **EP 3 683 642 B1**

(12) **EUROPEAN PATENT SPECIFICATION**

(45) Date of publication and mention
of the grant of the patent:
**01.03.2023 Bulletin 2023/09**

(21) Application number: **20152073.1**

(22) Date of filing: **15.01.2020**

(51) International Patent Classification (IPC):
**G05B 23/02** *(2006.01)*       **G07C 5/00** *(2006.01)*

(52) Cooperative Patent Classification (CPC):
**G05B 23/0283; G07C 5/008;** G05B 2219/2637

(54) **METHOD FOR MEASURING FATIGUE FOR MECHANICAL COMPONENTS OF AN AIRCRAFT**

VERFAHREN ZUR MESSUNG DER ERMÜDUNG VON MECHANISCHEN KOMPONENTEN EINES FLUGZEUGES

PROCEDE DE MESURE DE FATIGUE POUR PIECES MECANIQUES D'UN AERONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2019  IT 201900000617**

(43) Date of publication of application:
**22.07.2020  Bulletin 2020/30**

(73) Proprietor: **LEONARDO S.p.A.**
**00195 Roma (IT)**

(72) Inventors:
• **ROSSI, Fabio**
**14036 MONCALVO (AT) (IT)**
• **ZULIAN, Eros**
**10088 VOLPIANO (TO) (IT)**

(74) Representative: **Bongiovanni, Simone et al**
**Studio Torta S.p.A.**
**Via Viotti, 9**
**10121 Torino (IT)**

(56) References cited:
**US-A1- 2009 306 909     US-B1- 9 260 200**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

This patent application claims priority from Italian patent application no. 102019000000617 filed on 15/01/2019.

TECHNICAL FIELD

The present invention relates to a method for verifying the integrity of operating life data of mechanical components of a system subject to fatigue. In particular, hereinafter reference will be made to rotary mechanical components of an aircraft, without however losing generality.

BACKGROUND ART

As known, an aircraft comprises a set of mechanical components, in particular of the rotary type, like, for example gearboxes (GB), turbines and compressors.
In use, the aircraft is actuated to carry out different flight sessions; in particular, each flight session comprises one or more flight operations, like for example, take-off, landing, cruising, test flight and/or emergency flight. Hereinafter, for the sake of simplicity and without any loss of generality, it will be considered that the aircraft carries out a single flight session, the latter comprising different flight operations.
In each flight operation of the flight session, one or more rotary mechanical components are activated for respective one or more operating periods, i.e. time periods (measured, for example, in hours) that lapse between the ignition and the shutting down of the respective rotary mechanical component; in particular, each operating period is defined as fatigue cycle.
In detail, each fatigue cycle depends on different factors, like, for example, the type of flight operation carried out, the environmental conditions (for example air pressure and temperature) and the interactions between the rotary mechanical components of the flight configuration during the performance of the one or more flight operations.
Each rotary mechanical component can be activated many times in a single flight operation; therefore, each rotary mechanical component can carry out many fatigue cycles in a single flight operation of the flight session of the aircraft.
At the end of the flight session, each rotary mechanical component has accumulated many hours of operation and, therefore, many fatigue cycles; in particular, the total number of hours of operation accumulated by each rotary mechanical component at the end of the flight session contributes to defining an operating life for each rotary mechanical component. In particular, the operating life of a rotary mechanical component is the number of hours of operation elapsed during the aforementioned flight session (and, therefore, the one or more flight operations) relative to the aforementioned rotary mechanical component; in greater detail, the operating life of a rotary mechanical component is an indicator of the number of fatigue cycles carried out in the aforementioned flight session of the aircraft.
Since the aircraft is subjected to many flight sessions of the type described earlier, the number of hours of operation (and, therefore, the number of fatigue cycles and the operating life) of each rotary mechanical component of the flight configuration increases in every flight session.
Each rotary mechanical component is capable of operating for a maximum number of hours of operation, i.e. a maximum number of fatigue cycles, beyond which the aforementioned rotary mechanical component must be replaced for safety reasons. Therefore, the rotary mechanical component has a maximum operating life.

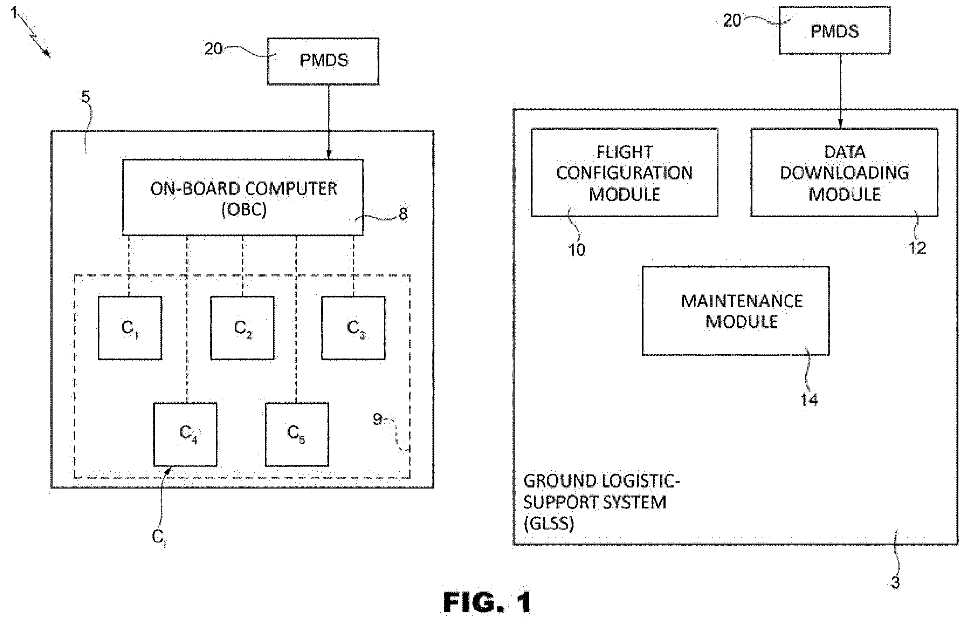

Figure 1 schematically shows a flight apparatus 1 comprising a ground logistic-support system (GLSS) 3 and an aircraft 5.
In particular, the aircraft 5 comprises: a flight configuration 9, which, for the sake of simplicity, comprises only m rotary mechanical components $C_i$ (for example, five shown in figure 1 and indicated hereinafter with reference symbols $C_1$-$C_5$), in which i is an integer comprised between 1 and m.
The aircraft 5 also comprises an on-board computer (OBC) 8, coupled to the flight configuration 9; in particular, the OBC 8 is adapted for controlling the flight configuration 9 (in particular, the rotary mechanical components $C_1$-$C_5$) during one or more flight operations carried out in one or more flight sessions of the aircraft 5. Moreover, the OBC 8 is adapted for determining and storing flight data relative to the rotary mechanical components $C_1$-$C_5$ after having carried out one or more flight sessions; in detail, the flight data comprise, for example: the hours of operation relative to each rotary mechanical component $C_1$-$C_5$; and a number of ignitions N of the aircraft 5.
In particular, the number of ignitions N represents the number of times in which the aircraft 5 is controlled to carry out any flight operation; in other words, the number of ignitions N is an indicator of the total number of flight operations carried out by the aircraft 5. For example, the aircraft 5 can operate in normal mode for a number of ignitions $N_a$; in test mode for a number of ignitions $N_t$; and in emergency mode for a number of ignitions $N_e$. Consequently, the

aircraft 5 carries out $N_a$ flight operations in normal mode, Nt flight operations in test mode and $N_e$ flight operations in emergency mode. Moreover, the number of ignitions N is defined as the sum of the number of ignitions $N_a$, $N_t$ and $N_e$; in addition, the number of ignitions N, as well as the ignition numbers $N_a$, $N_t$ and $N_e$ increases after each flight operation carried out by the aircraft 5.

The GLSS 3 comprises many data storage modules, adapted for receiving and storing data relative to the rotary mechanical components $C_1$-$C_5$ of the aircraft 5; in particular, the GLSS 3 of figure 1 includes: an aircraft configuration module 10, comprising identifying data (for example, part number, serial number, hours of operation and maximum number of fatigue cycles) relative to the rotary mechanical components $C_1$-$C_5$; a data downloading module 12 adapted for receiving and decoding the flight data relative to the flight configuration 9 after every flight session carried out by the aircraft 5; and a maintenance module 14, adapted for storing maintenance data (for example, serial number and hours of operation) of replaced rotary mechanical components that, when mounted instead of the corresponding rotary mechanical components $C_1$-$C_5$ in maintenance step, modify the flight configuration 9.

A Portable Maintenance Data Storage (PMDS) 20 can be coupled to the data downloading module 12 of the GLSS 3 and to the OBC 8 of the aircraft 5; for example, the PMDS 20 is a cassette storage device. Moreover, the PMDS 20 is adapted for storing the identifying data of the rotary mechanical components $C_1$-$C_5$ and the relative flight data after the one or more flight sessions, as well as transmitting such flight data to the GLSS 3 (in particular, to the data downloading module 12).

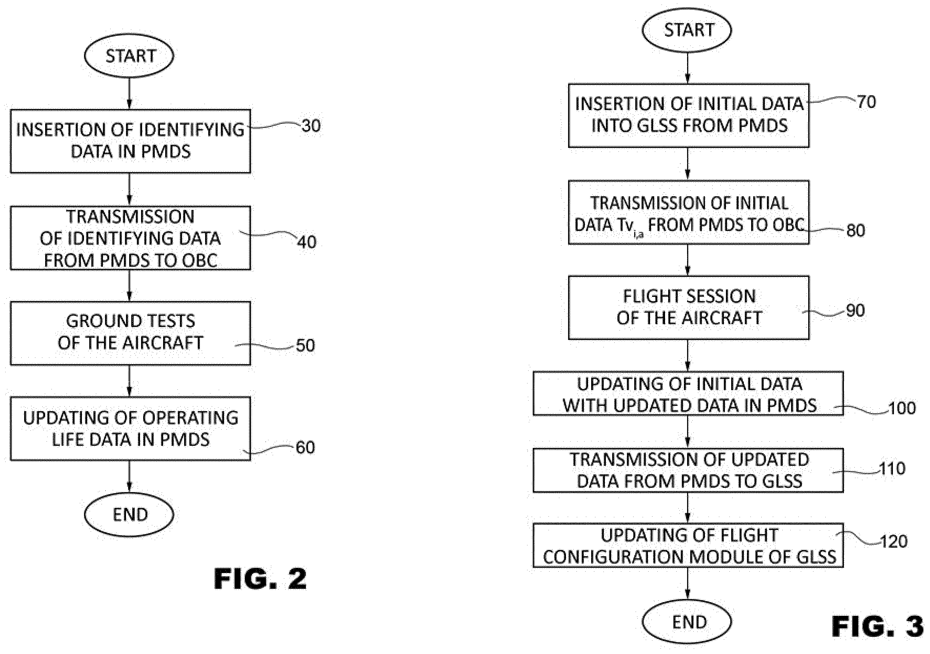

In greater detail, the PMDS 20 is initialized according to the method illustrated in figure 2 and described hereinafter.

Once the flight configuration 9 is installed on the aircraft 5, the PMDS 20 is connected to a processor (not shown), through which a user (for example, a maintenance worker) inserts the identifying data relative to the rotary mechanical components $C_1$-$C_5$ of the flight configuration 9 (block 30).

In general, the identifying data relative to each rotary mechanical component $C_i$ comprise fixed data and variable data. In particular, the fixed data comprise, for example: a part number $P/N_j$ (in which j is an integer comprised between 1 and k, where k is an integer, less than m), indicating a category (or series) to which the aforementioned rotary mechanical component $C_i$ belongs; a serial number $S/N_i$, indicating a number identifying the aforementioned rotary mechanical component $C_i$; and maximum number of fatigue cycles $N_{Cmax, i}$. Moreover, the variable data comprise an initial operating life datum $Tv_{0, i}$ (if present, like, for example, in the case of reconditioned rotary mechanical components), indicating the hours of operation elapsed of the relative rotary mechanical component $C_i$.

In greater detail, in the insertion step of the identifying data, the maintenance worker associates one or more serial numbers $S/N_i$ to each part number $P/N_j$; in particular, rotary mechanical components $C_i$ of the same category have the same part number $P/N_j$ but a different serial number $S/N_i$. Therefore, a part number $P/N_j$ and one or more serial numbers $S/N_i$ relative to one or more rotary mechanical components $C_i$ of the same category directly correspond to one another.

Moreover, the maintenance worker uniquely associates each serial number $S/N_i$ with data relative to the operation of each rotary mechanical component $C_i$, in particular initial operating life data $Tv_{0, i}$ and maximum number of fatigue cycles $N_{Cmax, i}$.

Therefore, at the end of the insertion step of the identifying data, each rotary mechanical component $C_i$ is identified with a relative part number $P/N_j$, a relative serial number $S/N_i$, relative initial operating life data $Tv_{0, i}$ and relative number of fatigue cycles $N_{Cmax, i}$.

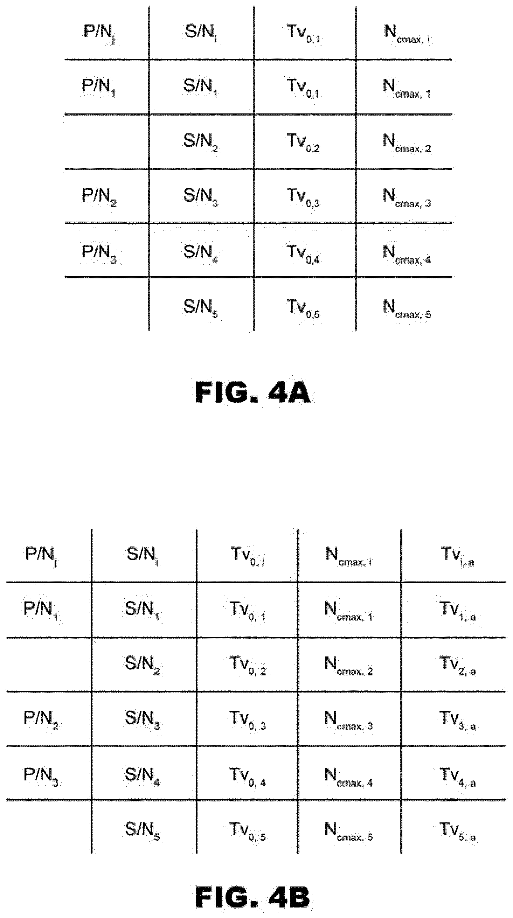

Consequently, with reference to figure 1, each rotary mechanical component $C_1$-$C_5$ is characterised by respective part numbers $P/N_1$-$P/N_3$, respective serial numbers $S/N_1$-$S/N_5$, respective initial operating life data $Tv_{0, 1}$-$Tv_{0, 5}$ and respective maximum numbers of fatigue cycles $N_{Cmax, 1}$-$N_{Cmax}$, s. Moreover, the flight configuration module 10 stores such identifying data for example in table format, as shown schematically in figure 4A.

At the end of the step described with reference to block 30, the PMDS 20 has stored the identifying data (in particular, the hours of operation) relative to the flight configuration 9 of the aircraft 5.

Thereafter, block 40, the PDMS 20 is disconnected from the GLSS 3 and connected to the OBC 8 of the aircraft 5. Here, the PDMS 20 transmits the identifying data of the flight configuration 9 to the OBC 8, which receives them and stores them in an internal memory (not shown). Such identifying data stored in the OBC 8 constitute the starting data for the subsequent operations of the initialisation method, described hereinafter.

In particular, block 50, the maintenance worker carries out one or more ground tests of the aircraft 5. In particular, hereinafter, it will be considered that the one or more ground tests are followed for some rotary mechanical components $C_1$-$C_5$, for example the rotary mechanical components $C_1$-$C_4$, defined hereinafter as rotary mechanical components under examination $C_1$-$C_4$; in greater detail, as an example, the rotary mechanical components under examination $C_1$-$C_4$ are, respectively, the right Air Turbine Starter Motor (ATSM) $C_1$, the right GB $C_2$, the left ATSM $C_3$ and the left GB $C_4$. Moreover, it should be noted that, in the example considered, the right ATSM $C_1$ and the right GB $C_2$ form a first pair and operate jointly when the right motor is started; similarly, the left ATSM $C_3$ and the left GB $C_4$ form a second pair and operate jointly when the aforementioned left motor is started.

Again with reference to block 50, in a first step, the one or more ground tests are, for example, carried out for the first pair $C_1$-$C_2$. In particular, the maintenance worker interacts with the OBC 8, so that the latter sends an activation command to the right motor of the aircraft 5; thereafter, the maintenance worker tests the first pair $C_1$-$C_2$ carrying out one or more ground tests, so as to verify that it operates correctly.

If the first pair $C_1$-$C_2$ has operated correctly, the maintenance worker interacts with the OBC 8 so as to send a deactivation command to the right motor. Differently, if the maintenance worker has encountered an anomaly in the operation of the first pair $C_1$-$C_2$, the right motor is deactivated through a command coming from the OBC 8 and the maintenance worker takes care of replacing both of the rotary mechanical components under examination $C_1$, $C_2$ of the first pair $C_1$-$C_2$. Alternatively, if only one of the rotary mechanical components $C_1$, $C_2$ of the first pair $C_1$-$C_2$ is not operating, the maintenance worker replaces the defective rotary mechanical component.

Subsequently, in an analogous way to what has been described earlier, the maintenance worker carries out one or more ground tests for the second pair $C_3$-$C_4$. In particular, the maintenance worker interacts with the OBC 8, so that the latter sends an activation command to the left motor of the aircraft 5; thereafter, the maintenance worker tests the second pair $C_3$-$C_4$ carrying out one or more ground tests, so as to verify that it operates correctly.

In a manner similar to what has been discussed with reference to the first pair $C_1$-$C_2$, if the second pair $C_3$-$C_4$ has operated correctly, the maintenance worker interacts with the OBC 8 so as to send a deactivation command to the left motor. Differently, if the maintenance worker has encountered an anomaly in the operation of the second pair $C_3$-$C_4$, the right motor is deactivated through a command coming from the OBC 8 and the maintenance worker takes care of replacing both of the rotary mechanical components under examination $C_3$, $C_4$ of the second pair $C_3$-$C_4$. Alternatively, if only one of the rotary mechanical components $C_3$, $C_4$ of the second pair $C_3$-$C_4$ is not operating, the maintenance worker replaced the defective rotary mechanical component.

At the end of the first and second step, the maintenance worker has been able to verify whether the rotary mechanical components under examination $C_1$-$C_4$ operate correctly in the activation step. Such a verifying operation can be extended, without any loss of generality, also to the rotary mechanical component $C_5$ of the flight configuration 9, so that it is also tested before the actual use of the aircraft 5.

Therefore, in general, the one or more ground tests are aimed at testing the operation of single rotary mechanical components $C_1$-$C_5$ o, in some cases, of groups of rotary mechanical components $C_1$-$C_5$ belonging to the flight configuration 9, so as to verify the correct operation thereof.

Moreover, during the one or more ground tests, each rotary mechanical component $C_1$-$C_5$ carries out one or more fatigue cycles, which are monitored by the OBC 8 and contribute to increasing the number of hours of operation, as well as the initial operating life data $Tv_{0,1}$-$Tv_{0,5}$ of the respective rotary mechanical component $C_1$-$C_5$.

At the end of the one or more ground tests, block 60, the OBC 8 updates the initial operating life data $Tv_{0,1}$-$Tv_{0,5}$ based on the one or more fatigue cycles carried out in the previous block. At the end of the flight operations, the OBC 8 has stored first operating life data $Tv_{i,a}$, which are determined based on the hours of operation elapsed in the previous block; in detail, for the flight configuration 9, there are first operating life data $Tv_{1,a}$-$Tv_{5,a}$, forming part of the variable data of the identifying data of the components $C_1$-$C_5$. In particular, the first operating life data $Tv_{1,a}$-$Tv_{5,a}$ comprise operating life data relative to different operating modes of the aircraft 5; therefore, for example, the first operating life data $Tv_{1,a}$-$Tv_{5,a}$ comprise operating life data in normal, test and emergency conditions. Moreover, the first operating life data $Tv_{1,a}$-$Tv_{5,a}$ comprise operating life data relative to different operating conditions of the aircraft 5, like, for example, operating life data in normal and high-temperature conditions.

Thereafter, the first operating life data $Tv_{1,a}$-$Tv_{5,a}$ are transmitted from the OBC 8 to the PMDS 20 (block 60). Therefore, the first operating life data $Tv_{1,a}$-$Tv_{5,a}$ are stored in the PDMS 20; in this way, the initial operating life data $Tv_{0,1}$-$Tv_{0,5}$, previously stored in the PMDS 20 in the step illustrated in block 30, are overwritten with the first operating life data $Tv_{1,a}$-$Tv_{5,a}$. Then, the PDMS 20 is disconnected from the OBC 8.

At the end of the process shown in figure 2, the aircraft 5 and the PMDS 20, containing the updated identifying data (in particular, the first operating life data $Tv_{1,a}$-$Tv_{5,a}$) relative to the flight configuration 9, mounted on the aircraft 5, can be delivered to a user that uses the aircraft 5.

Figure 3 schematically shows a block diagram of an updating method of the identifying data (in particular, of the first operating life data $Tv_{1,a}$-$Tv_{5,a}$) stored in the PMDS 20 after a flight session carried out by the aircraft 5. In particular, the steps shown in the block diagram of figure 3 are carried out after the initialization method of the PMDS 20 shown earlier in figure 2; therefore, the block diagram of figure 3 shows steps in which the aircraft 5 is used for the first time by the user that uses it and for a single flight session, the latter comprising one or more flight tests.

Initially, block 70, the PMDS 20 is connected to the GLSS 3, in particular at the data downloading module 12. Here, the PMDS 20 transmits the identifying data (in particular, the updated operating life data $Tv_{1,a}$-$Tv_{5,a}$) relative to the flight configuration 9 to the GLSS 3; in particular, the GLSS 3 acquires such identifying data at the data downloading module 12. Thereafter, the identifying data thus received are transmitted to the flight configuration module 10, where they are stored.

In particular, the identifying data are stored in the flight configuration module 10, for example, in tabular format, as shown for example in figure 4B.

Hereinafter, reference will be made to such identifying data, in particular the first operating life data $Tv_{1,\,a}$-$Tv_{5,\,a}$, as initial data.

After the storage of the initial data in the GLSS 3, block 80, the PMDS 20 is disconnected from the GLSS 3 and subsequently connected to the OBC 8 of the aircraft 5. In particular, similarly to what has been described at block 70, the PMDS 20 transmits the initial data to the OBC 8, which stores them in the internal memory (not shown). The internal memory of the OBC 8, similarly to the GLSS 3, can store the initial data, for example, in tabular format as shown in figure 4B.

Thereafter, block 90, the aircraft 5 is actuated so as to carry out the one or more flight operations in the flight session.

In particular, the aircraft 5 is activated for the number of ignitions N; therefore, for example, for the number of ignitions Nt to carry out test flights, for the number of ignitions $N_a$ to carry out flights in normal conditions and for the number of ignitions $N_e$ to carry out emergency flights; relative to each flight operation, the OBC 8 monitors the hours of operation of each rotary mechanical component $C_1$-$C_5$ activated during the aforementioned flight operations. In particular, the monitoring of the hours of operation of the rotary mechanical components $C_1$-$C_5$ is carried out through a plurality of sensors (not shown), like, for example phonic wheels adapted for providing a signal in frequency proportional to the rotation speed, forming part of the aircraft 5.

Moreover, the OBC 8 records the number of ignitions N of the different flight operations of the aircraft 5 through relative counters (not shown), also forming part of the aircraft 5; for example, the OBC 8 records: the number of ignitions $N_a$ in normal mode; the number of ignitions $N_t$ in test mode; and the number of ignitions $N_e$ in emergency mode.

At the end of the flight operations, block 100, the OBC 8 determines the total number of hours of operation of each rotary mechanical component $C_1$-$C_5$ and stores it; moreover, the OBC 8 stores the number of ignitions N (and, therefore, the numbers of ignitions $N_a$, $N_t$ and $N_e$).

In other words, at the end of the flight session of block 90, the first operating life data $Tv_{i,\,a}$ are overwritten with second operating life data $Tv_{i,\,b}$, obtained after the one or more flight operations of block 90 and forming part of the variable data of the aforementioned identifying data of the components $C_i$. In particular, for the flight configuration 9, there are second operating life data $Tv_{1,\,b}$-$Tv_{5,\,b}$. Therefore, the OBC 8 stores updated identifying data (hereinafter defined as updated data), comprising the second operating life data $Tv_{1,\,b}$-$Tv_{5,\,b}$.

Similarly to what has been discussed earlier, the second operating life data $Tv_{1,\,b}$-$Tv_{5,\,b}$ also comprise data relative to the rotary mechanical components $C_i$ in different operating conditions of the aircraft 5; therefore, for example, the second operating life data $Tv_{1,\,b}$-$Tv_{5,\,b}$ are given by the sum of operating life data in normal mode $Tv_{norm,\,1}$-$Tv_{norm,\,5}$, operating life data in test mode $Tv_{t,\,1}$-$Tv_{t,\,5}$ and operating life data in emergency mode $Tv_{e,\,1}$-$Tv_{e,\,5}$.

Thereafter, the updated data are transmitted to the PMDS 20, so that, once received by the PMDS 20, the updated data, calculated by the OBC 8, overwrite the initial data stored in the PMDS 20. In other words, the initial data (in particular, the first operating life data $Tv_{1,\,a}$-$Tv_{5,\,a}$) in the PMDS 20 are overwritten with the updated data (in particular, the second operating life data $Tv_{1,\,b}$-$Tv_{5,\,b}$).

Thereafter, block 110, the PMDS 20 is disconnected from the OBC 8 of the aircraft 5 and subsequently connected to the GLSS 3. In particular, the PMDS 20 transmits the updated data, received in the previous block, to the GLSS 3 (in particular, at the data downloading module 12); once received, the data downloading module 12 transmits the aforementioned updated data to the flight configuration module 10.

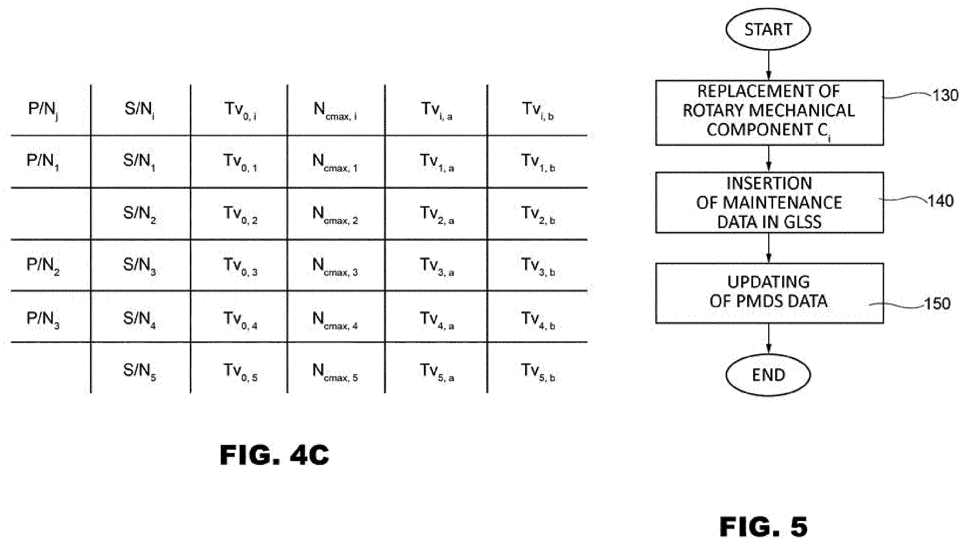

Then, block 120, the identifying data relative to the rotary mechanical components $C_1$-$C_5$, stored earlier in the GLSS 3 (i.e. the initial data), and the identifying data received by the data downloading module 12 (i.e. the updated data) are present in the flight configuration module 10; for example, the updated data are stored in the GLSS 3 in tabular format, as shown schematically in figure 4C. Alternatively, in particular the first and the second operating life data $Tv_{1,\,a}$-$Tv_{5,\,a}$, $Tv_{1,\,b}$-$Tv_{5,\,b}$ are represented in graph form, for example with curvilinear graphs. Moreover, similarly to the first operating life data $Tv_{1,\,a}$-$Tv_{5,\,a}$, the GLSS 3 stores each second operating life datum $Tv_{1,\,b}$-$Tv_{5,\,b}$ of each rotary mechanical component $C_1$-$C_5$, associating it uniquely to the remaining identifying data relative to the same rotary mechanical component $C_1$-$C_5$ (in particular, between part number $P/N_1$-$P/N_3$, serial number $S/N_1$-$S/N_5$ and the first operating life data $Tv_{1,\,a}$-$Tv_{5,\,a}$); indeed, the relationship between the identifying data is maintained.

At the end of the process illustrated in figure 3, the GLSS 3 comprises a data history, containing the initial data (in particular, the first operating life data $Tv_{1,\,a}$-$Tv_{5,\,a}$) and the data relative to the first use of the aircraft 5 (in particular, the second operating life data $Tv_{1,\,b}$-$Tv_{5,\,b}$).

In addition, the second operating life data $Tv_{1,\,b}$-$Tv_{5,\,b}$ constitute the new initial data from which to start for a subsequent flight session; therefore, the method illustrated in figure 3 is repeated (in particular, steps 80-120) for every flight session of the aircraft 5. Consequently, at every flight session of the aircraft 5, the identifying data (in particular, the second operating life data $Tv_{1,\,b}$-$Tv_{5,\,b}$) of the rotary mechanical components $C_1$-$C_5$ are updated at every iteration; such a procedure is repeated until the maximum number of fatigue cycles $N_{Cmax,\,1}$-$N_{Cmax,\,5}$ of the one or more rotary mechanical components $C_1$-$C_5$ is reached. Once the maximum number of fatigue cycles $N_{Cmax,\,1}$-$N_{Cmax,\,5}$ has been reached, the GLSS 3 generates a maintenance warning message; in particular, the maintenance warning message warns the user of the need to replace one or more rotary mechanical components $C_1$-$C_5$ of the flight configuration 9, in particular indicating which of the rotary mechanical components $C_1$-$C_5$ must be replaced.

Figure 5 schematically shows a maintenance method carried out by a maintenance worker after the generation of a maintenance warning message by the GLSS 3. In particular, the maintenance warning message notifies the user that uses the aircraft 5 of the need to replace one or more rotary mechanical components Ci, due to the relative maximum numbers of fatigue cycles $N_{Cmax, 1}$-$N_{Cmax, 5}$ having been exceeded; in particular, the warning takes place, for example, through a display (not shown), forming part of the GLSS 3.

In particular, block 130, the maintenance worker takes care of replacing the one or more rotary mechanical components $C_i$ indicated in the maintenance warning message of the GLSS 3 with one or more replacement rotary mechanical components Csi; in detail, in the case of the flight configuration 9 of figure 1, there are one or more replacement components $C_{S1}$-$C_{S5}$. In particular, the one or more replacement rotary components $C_{S1}$-$C_{S5}$ share the same part number $P/N_1$-$P/N_3$ as the rotary mechanical components $C_1$-$C_5$ to be replaced. For example, if the rotary mechanical component $C_1$ must be replaced, the maintenance worker will mount a rotary mechanical component Csi, the part number $P/N_1$ remains unchanged; differently, the one or more replacement rotary mechanical components $C_{S1}$-$C_{S5}$ have relative serial numbers $S/N_{S1}$-$S/N_{S5}$, initial operating life data $Tv_{S0, 1}$-$TV_{S0, 5}$ and number of fatigue cycles $N_{Cmax, S1}$-$N_{Cmax, S5}$.

Thereafter, block 140, the maintenance worker takes care of inserting the data relative to the one or more replacement rotary mechanical components $C_{S1}$-$C_{S5}$ in the maintenance module 14 of the GLSS 3. After the insertion of such data, the GLSS 3 takes care of updating the data stored in the flight configuration module 10 based on the data stored in the maintenance module 14, so as to integrate the data relative to the one or more replacement rotary mechanical components $C_{S1}$-$C_{S5}$.

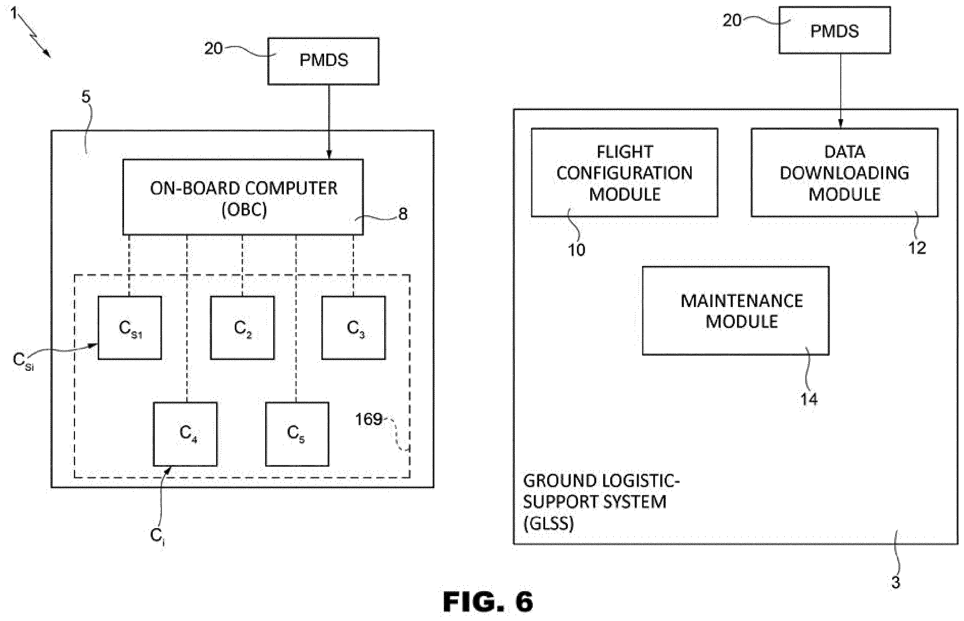

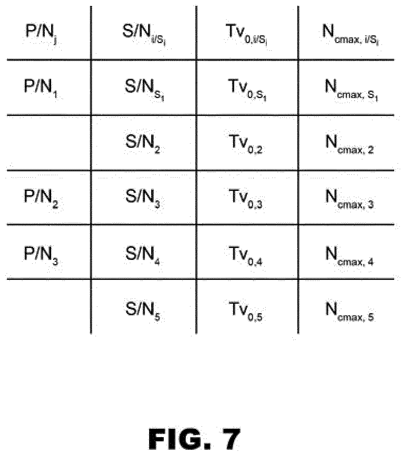

In particular, the maintenance module 14 transmits the identifying data relative to the one or more replacement mechanical components $C_{S1}$-$C_{S5}$ to the flight configuration module 10. Thereafter, the flight configuration module 10 stores the data received by the maintenance module 14, so as to store the data relative to a new flight configuration (shown schematically in figure 6 and indicated with reference numeral 169) mounted on the aircraft 5. In particular, figures 6 and 7 show, respectively, the flight system 1 with the new flight configuration 169 and the relative table stored in the flight configuration module 10 of the GLSS 3; in particular, in figures 6 and 7 it is considered that the rotary mechanical component $C_1$ has been replaced with the replacement mechanical component $C_{S1}$ and that the relative identifying data have been stored, for example, in tabular format in the GLSS 3 (figure 7).

Thereafter, block 150, the PMDS 20 is connected to the data downloading module 12 of the GLSS 3, so as to be able to receive the data relative to the new flight configuration 169; thereafter, the PMDS 20 is updated by the GLSS 3. In particular, the GLSS 3 transmits and overwrites the identifying data of the flight configuration 9 with the data relative to the new flight configuration 169.

At the end of the maintenance procedure indicated above, steps 80-120 of the process illustrated in figure 3 are repeated every time the aircraft 5 operates. In particular, after the replacement of one or more rotary mechanical components $C_1$-$C_5$, the initial data from which the OBC 8 starts are the identifying data relative to the one or more replacement mechanical components $C_{S1}$-$C_{S5}$.

However, the present flight system 1 has critical elements.

In detail, the identifying data, in particular the first and second operating life data $Tv_{1, a}$-$Tv_{5, a}$, $Tv_{1, b}$-$Tv_{5, b}$, of the rotary mechanical components $C_1$-$C_5$, stored in the PMDS 20, can be corrupted or suffer from errors of various kinds.

In particular, the identifying data of one or more rotary mechanical components $C_1$-$C_5$ can be incorrect due to data transmission problems between the PDMS 20 and the OBC 8 or between the PMDS 20 and the GLSS 3.

In greater detail, if the data transmission error occurs between the PMDS 20 and the OBC 8 before the flight operations are carried out (block 80 of figure 3), the initial data used by the OBC 8 for monitoring the rotary mechanical components $C_1$-$C_5$ on the aircraft 5 suffer from such a transmission error; therefore, at the end of the flight operations, the OBC 8 will provide the PMDS 20 with incorrect second operating life data $Tv_{1, b}$-$Tv_{5, b}$ (block 100 of figure 3). Moreover, the second operating life data $Tv_{1, b}$-$Tv_{5, b}$ calculated by the OBC 8, already intrinsically incorrect, can be further corrupted in the transmission from the OBC 8 to the PMDS 20.

Consequently, when the PMDS 20 transmits the aforementioned second operating life data $Tv_{1, b}$-$Tv_{5, b}$ to the GLSS 3 for storage (block 110 of figure 3), the GLSS 3 will receive incorrect data and, therefore, can generate maintenance warning messages.

Similarly, if the data transmission error occurs between the PMDS 20 and the GLSS 3 before the flight operations are carried out (blocks 70 or 110 of figure 3), the identifying data stored in the PMDS 20 suffer from error; therefore, the OBC 8, at the moment when it receives and processes the aforementioned identifying data (in particular the first or the second operating life data $Tv_{1, a}$-$Tv_{5, a}$, $Tv_{1, b}$-$Tv_{5, b}$), will operate on incorrect data.

In addition, the initialization process shown in figure 2 can also be subject to error. In particular, since the ground tests of the rotary mechanical components $C_1$-$C_5$ are sectorial (i.e. one or more rotary mechanical components $C_1$-$C_5$ are activated), the OBC 8 of the aircraft 5 is not capable of providing totally correct first operating life data $Tv_{1, a}$-$Tv_{5, a}$,

since only part of the aircraft 5 is activated in order to ensure the operation of the rotary mechanical component $C_1$-$C_5$ to be tested; therefore, the maintenance worker carries out an estimation of the aforementioned first operating life data $Tv_{1,a}$-$Tv_{5,a}$. It derives from this that the rotary mechanical components $C_1$-$C_5$ can have overestimated or underestimated first operating life data $Tv_{1,a}$-$Tv_{5,a}$ with respect to their real values.

Moreover, a further error source is the storage error of the identifying data of the replacement rotary mechanical components $C_{S1}$-$C_{S5}$ in the maintenance step. In particular, the maintenance worker can insert the aforementioned identifying data incorrectly into the maintenance module of the GLSS 3; for example, the maintenance worker may not insert the serial number of the replacement rotary mechanical component $C_{S1}$-$C_{S5}$ or get the order of insertion of the aforementioned identifying data wrong.

In addition, malfunctions in the feeding network of the aircraft 5, especially in the initialization or use step of the aircraft 5 itself, can introduce further errors. In particular, such malfunctions can, in some cases, lead to a reset of the OBC 8 for a certain time period; in such a time period, the OBC 8 is not capable of monitoring the first or the updated second operating life data $Tv_{1,a}$-$Tv_{5,a}$, $Tv_{1,b}$-$Tv_{5,b}$ of the rotary mechanical components $C_1$-$C_5$ or the number of ignitions N of the aircraft 5; therefore, the OBC 8 records a "dead" period, in which no data is acquired. Therefore, the initial or updated data recorded by the OBC 8 at the end of the initialization step or of the updating step of the data of the GLSS 3 (respectively, methods illustrated in figures 2 and 3) are incomplete.

The errors listed above can lead to the GLSS 3 generating a premature maintenance warning message or, in some cases, a delayed one; moreover, if the errors in the data stored by the GLSS 3 are not identified and corrected, the GLSS 3 can generate further maintenance warning messages. In other words, the flight system 1 must be subjected to more frequent maintenance checks, in which it is necessary to verify the actual need to replace the one or more rotary mechanical components $C_1$-$C_5$ imputed.

US 9,260,200 B1 discloses a metal fatigue analytics and alert systems.

US 2009/306909 A1 discloses a method for the evaluation of measured values for the recognition of defect conditions due to material fatigue on aircraft parts.

DISCLOSURE OF INVENTION

The purpose of the present invention is to provide a method that at least partially overcomes the drawbacks of the prior art.

According to the present invention a method for verifying the integrity of operating life data of mechanical components of a system subject to fatigue is made, as defined in the independent claim. Other preferred embodiments may be found in the dependent claims.

BRIEF DESCRIPTION OF THE DRAWINGS

For better understanding of the present invention, a preferred embodiment thereof is now described, purely as a non-limiting example, with reference to the attached drawings, in which:

- figure 1 schematically shows a flight system;
- figure 2 schematically shows a block diagram of an initialization method of a memory element of the system of figure 1;
- figure 3 schematically shows a block diagram of a data updating method of the flight system of figure 1;
- figures 4A-4C show a portion of the flight system of figure 1 in different operating stages, as an example;
- figure 5 schematically shows a block diagram of a maintenance method of an aircraft of the flight system of figure 1; and
- figure 6 schematically shows the flight system of figure 1 with flight configuration modified according to the method of figure 5;
- figure 7 shows a portion of the flight system of figure 6, as an example; and
- figure 8 schematically shows a block diagram of the present error correction method.

BEST MODE FOR CARRYING OUT THE INVENTION

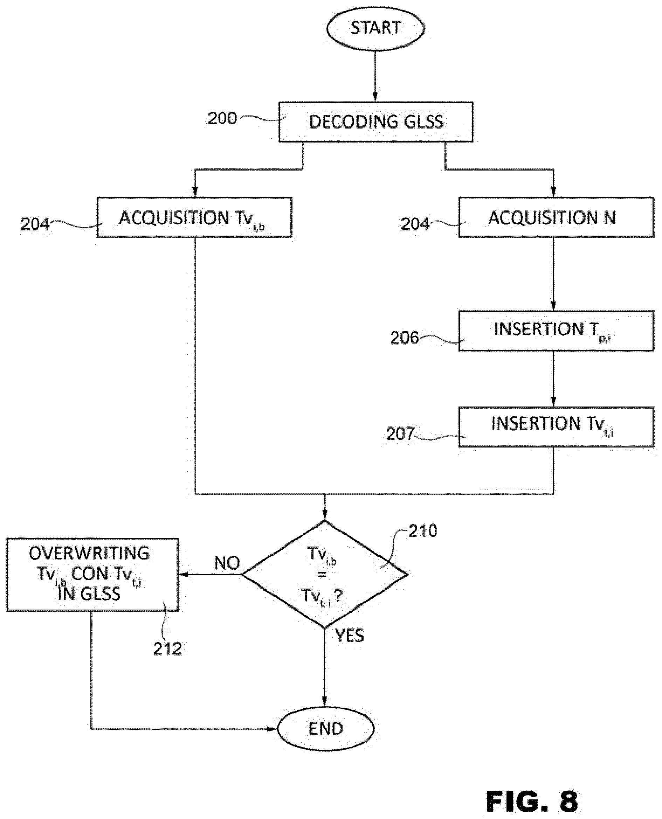

Figure 8 schematically shows a block diagram of the present integrity verification method; in particular, the present integrity verification method is described in reference to the flight system 1 shown in figure 1, assuming that the initialization method described earlier with reference to figure 2 has been carried out.

Moreover, the present method makes it possible to identify and correct errors in the data history of the ground logistic-support system (GLSS) 3, stored at the end of the updating method described with reference to figure 3; for the sake of simplicity of description and without any loss of generality, the present method is described with reference to the data history stored in the GLSS 3 at the end of the updating method described with reference to figure 3. In particular, as described earlier, the data history of the GLSS 3 comprises the identifying data relative to each rotary mechanical

component $C_1$-$C_5$, in particular the first and second operating life data $Tv_{1, b}$-$Tv_{5, b}$, $Tv_{1, b}$-$Tv_{5, b}$; moreover, the data history of the GLSS 3 comprises the number of ignitions N of the aircraft 5 after a flight session (block 90 of figure 3), the latter comprising one or more flight operations (for example, flights in normal mode, flights in test mode and flights in emergency mode). In particular, the number of ignitions N is an indicator of the total number of flight operations carried out in the flight session considered; for example, as stated earlier, the number of ignitions N comprises the number of ignitions $N_a$ in normal mode, the number of ignitions $N_t$ in test mode and the number of ignitions $N_e$ in emergency mode.

In addition, the present integrity verification method is preferably activated after the emission of a maintenance warning message of the GLSS 3 in order to verify whether such a warning is premature, delayed or appropriate; in particular, such an emergency procedure is carried out by a software installed on the GLSS 3. Moreover, in order to facilitate the understanding of the present invention, it is considered that the aforementioned maintenance warning message has been generated after receiving and storing the second operating life data $Tv_{1, b}$-$Tv_{5, b}$ (block 120 of figure 3).

Initially, block 200, the data history relative to the rotary mechanical components $C_1$-$C_5$ mounted on the aircraft 5 is decoded by the present method. In particular, the data history is stored in the flight configuration module 10. After the decoding operations, the identifying data relative to each rotary mechanical component $C_1$-$C_5$ are extracted, i.e. the part number $P/N_1$-$P/N_5$, the serial number $S/N_1$-$S/N_5$, the associated first and second operating life data $Tv_{1, a}$-$Tv_{5, a}$, $Tv_{1, b}$-$Tv_{5, b}$ and the maximum number of fatigue cycles $N_{Cmax, 1}$-$N_{Cmax, 5}$.

Thereafter, in block 202 the present method makes it possible to extract, for each rotary mechanical component $C_1$-$C_5$ mounted on the aircraft 5, the second operating life data $Tv_{1, b}$-$Tv_{5, b}$, which have highlighted the need for a maintenance intervention since they have led to the generation of a maintenance warning message, from the data history previously decoded in block 200.

At the same time as the step of block 202, the present method carries out the steps schematically indicated in blocks 204-208 of figure 8 and described hereinafter.

In particular, block 204, starting from the data history decoded in block 200, makes it possible to extract the number of ignitions N, detected during the updating method of figure 3 from the OBC 8, from the data history of the GLSS 3.

As an example, the numbers of ignitions $N_a$, $N_e$ and $N_t$, respectively relative to flight operations in normal mode, emergency mode and test mode, are extracted.

Thereafter, block 206, plausible operating life data $T_{pi}$, relative to the rotary mechanical components $C_i$ and stored in the GLSS 3 are selected; in particular, for the flight configuration 9 of figure 1, there are plausible lifetime data $T_{p1}$-$T_{p5}$.

In greater detail, the plausible lifetime data $T_{p1}$-$T_{p5}$ were previously introduced by a user and were determined through previous theoretical/practical experience (for example, system operation analysis); moreover, the plausible lifetime data $T_{p1}$-$T_{p5}$ represent simulated operating life data, which are an indicator of an average activation time for each rotary mechanical component $C_1$-$C_5$ relative to respective flight operations carried out by the aircraft 5. In other words, the plausible operating life data $T_{p1}$-$T_{p5}$ represent average operating life data for each flight operation carried out in a flight session of the aircraft 5. For example, supposing that the aircraft 5 carries out flight operations in normal mode, in test mode and in emergency mode, the relative plausible operating life data $T_{p1}$-$T_{p5}$ for each rotary mechanical component $C_i$ are: plausible operating life data in normal mode $T_{pa1}$-$T_{pa5}$; plausible operating life data in test mode $T_{pt1}$-$T_{pt5}$; and plausible operating life data in emergency mode $T_{pe1}$-$T_{pe5}$.

Thereafter, block 208, a target operating life datum $Tv_{ti}$, relative to each rotary mechanical component $C_i$ under examination, is obtained from the total number of ignitions N and from the plausible operating life data $T_{pi}$, obtained, respectively, in blocks 204 and 206. In particular, for the flight configuration 9, there are target operating life data $Tv_{t1}$-$Tv_{t5}$.

In particular, the target operating life datum $Tv_{ti}$ is calculated according to the equation (1):

$$Tv_{ti} = \sum_{r} N_r \cdot T_{pi,r} \tag{1}$$

where r is an indicator indicative of the type of flight mode used in one or more flight operations of a flight session of the aircraft 5; and i is an integer comprised between 1 and m, relative to the rotary mechanical components $C_i$. Therefore, relative to the flight configuration 9, the indicator r comprises the identifiers a, e, t relative to the normal, test and emergency flight modes; and the indicator i is comprised between 1 and 5, so as to identify the rotary mechanical components $C_1$-$C_5$.

In greater detail, the target operating life $Tv_{t1}$-$Tv_{t5}$ is an estimation that suffers from errors deriving from the fact that the plausible lifetime data $T_{p1}$-$T_{p5}$ are theoretical data. In any case, based on the tests carried out by the Applicant, the estimation error is low, for example equal to a few hours (for example about ten hours, considering that each rotary mechanical component $C_1$-$C_5$ can operate for a few thousand hours), and in any case is less than the error or the errors that may have modified or corrupted the identifying data stored in the data history of the GLSS 3.

With reference to block 210, the present correction method carries out a comparison between the second operating life data $Tv_{1, b}$-$Tv_{5, b}$ and the target operating life data $Tv_{t1}$-$Tv_{t5}$ calculated in the previous block for every single rotary mechanical component $C_1$-$C_5$. In other words, for example, for the rotary mechanical component $C_3$, the relative second updated operating life datum $Tv_{3,b}$ and the target operating life datum $Tv_{t,3}$ are compared, so as to verify whether the second updated operating life datum $T_{v3,b}$ is plausible and, therefore, whether the intervention of a maintenance worker is actually required.

In detail, if the second operating life data $Tv_{1,b}$-$Tv_{5,b}$ and the target operating life data $Tv_{t1}$-$Tv_{t5}$ are roughly equal (for example, the absolute value of the divergence $\Delta Tv_i$, relative to each rotary mechanical component $C_i$, is less than a limit value), the integrity verification method establishes that the data history relative to the rotary mechanical component $C_1$-$C_5$ considered does not suffer from errors and, therefore, warns the user that the maintenance warning message generated both by the OBC 8 and by the GLSS 3 indicates an actual need to replace the aforementioned mechanical component $C_1$-$C_5$ considered.

Alternatively, if the second operating life data $Tv_{1,b}$- $Tv_{5,b}$ and the target operating life data $Tv_{t1}$-$Tv_{t5}$ are much different from one another (for example, the absolute value of the divergence $\Delta Tv_i$, relative to each rotary mechanical component Ci, is above a limit value), the comparison gives a negative outcome; in particular, considering the flight configuration 9, there are divergences $\Delta Tv_1$- $\Delta Tv_5$ relative to the rotary mechanical components $C_1$-$C_5$. In this case, the correction method establishes that the data history relative to the rotary mechanical component $C_1$-$C_5$ considered suffers from one or more errors, and therefore the maintenance warning message is not reliable.

After the comparison of block 210, in the case of comparison with negative outcome, block 212, the second operating life datum $Tv_{1,b}$- $Tv_{5,b}$ relative to the rotary mechanical component $C_1$-$C_5$ considered in the previous comparison (block 210) is replaced (for example, overwritten) with the target operating life datum $Tv_{t1}$-$Tv_{t5}$ previously calculated based on what is stated above.

The tests carried out by the Applicant have highlighted that, although, as highlighted above, the target operating life data $Tv_{t1}$-$Tv_{t5}$ suffers from an estimation error, such an estimation error is less than the divergence $\Delta Tv_1$- $\Delta Tv_5$, relative to each rotary mechanical component $C_1$-$C_5$, due to the error or the errors present in the data history of the GLSS 3. For example, in some cases, the divergence $\Delta Tv_1$- $\Delta Tvs$ is greater by an order of magnitude with respect to the estimation error.

The method described above is thus repeated for all of the rotary mechanical components $C_1$-$C_5$ of the flight configuration 9 (in particular, steps 202-212 of figure 8 are repeated); in this way, once all of the rotary mechanical components $C_1$-$C_5$ have been verified and possible divergences $\Delta Tv_1$- $\Delta Tv_5$ have been eliminated (block 212), a user is capable of precisely discerning which among the rotary mechanical components $C_1$-$C_5$ indicated need a maintenance intervention.

The present method can be applied in an analogous manner also in the case in which there are errors in the data history of the GLSS 3 due to errors in the insertion of the maintenance data of the replacement rotary mechanical components Csi mounted on the aircraft 5 after the maintenance process shown schematically in figure 5.

The present method is independent from the kind of error (or errors) that has afflicted the flight system 1; therefore, the present method is aimed at identifying and, subsequently, correcting the error (or the errors) present in the data history of the flight system 1.

The present integrity verification method has many advantages.

In particular, the present integrity verification method makes it possible to identify and correct one or more errors, due to different kinds of problems, which afflict the data history, in particular one or more identifying data (in detail, operating life data) relative to one or more rotary mechanical components mounted on the aircraft, stored in the GLSS and that have caused the generation of a maintenance warning message. In particular, the present method makes it possible to overwrite such operating life data with empirical operating life data, suffering from a lower estimation error with respect to the error or errors that afflict the data history of the GLSS; moreover, the present method makes it possible to verify whether the maintenance warning message is correct, notifying the user of the actual need to carry out a maintenance intervention on the one or more rotary mechanical components of the present aircraft.

Moreover, the present method makes it possible to resolve such errors in short time periods, limiting the idle time of the aircraft.

In addition, since the present method makes it possible to verify that it is actually necessary to carry out maintenance operations of the aircraft, the present method therefore makes it possible to limit the costs due to maintenance and to the replacement rotary mechanical components, as well as to limit the use of stored replacement rotary mechanical components.

The present integrity verification method can be applied for any system subject to fatigue (for example, mechanical transmission systems). In this case, the input data, the integrity verification control logic components and the plausible values vary as a function of the type of system considered.

**Claims**

1. A method for verifying the integrity of operating life data of mechanical components ($C_i$, $C_1$-$C_5$, $C_{S1}$-$C_{S5}$) of a system subject to fatigue (5), said system subject to fatigue comprising an on-board computer, OBC, (8), configured to control said mechanical components, said system subject to fatigue being configured to carry out a set of operations comprising the steps of:

   receiving (80), from a portable memory device, PMDS - Portable Maintenance Data Storage, (20), which can be coupled to the on-board computer, OBC, first identifying data ($S/N_i$, $P/N_j$, $N_{Cmax, i}$, $Tv_{i, a}$) relative to each of said mechanical components of the system subject to fatigue, wherein said first identifying data comprise fixed data ($S/N_i$, $P/N_j$, $N_{Cmax, i}$, $Tv_{0, i}$) and first variable data ($Tv_{i, a}$), said fixed data being associated with said first variable data and comprising maximum life data ($N_{Cmax, i}$);
   carrying out (90) at least one first operating session, said at least one operating session comprising at least one first operation;
   determining a first number of ignitions ($N$, $N_a$, $N_t$, $N_e$) indicative of said at least one first operating session;
   determining, starting from said at least one first operating session, second identifying data ($S/N_i$, $P/N_j$, $N_{Cmax, i}$, $Tv_{i, b}$) relative to each of said mechanical components of the system subject to fatigue, said second identifying data comprising said fixed data and second variable data ($Tv_{i, b}$) determined following upon said at least one first operating session; and
   sending (100) said second identifying data and said first number of ignitions to said portable memory device , PMDS, (20) from said on-board computer, OBC,
   the method comprising the steps of:

   sending (110) said second identifying data and said first number of ignitions to a ground logistic-support system ,GLSS, (3) from said portable memory device, PMDS, which can be coupled to said ground logistic-support system ,GLSS, said ground logistic-support system, GLSS, comprising said first identifying data;
   storing (120), starting from said second identifying data, said second variable data and said first number of ignitions in said ground logistic-support system, GLSS, so as to determine a first data history; and
   determining that, if said second variable data are higher than said maximum life data, said first data history presents an error,
   the method being **characterized in that** it comprises the steps of:

   decoding (200), starting from said ground logistic-support system, GLSS, (3), said first data history regarding said mechanical components;
   acquiring (202), starting from said first data history decoded and for each of said mechanical components, said second variable data;
   acquiring (204), starting from said ground logistic-support system, GLSS, said first number of ignitions;
   determining reference data ($T_{p, i}$), indicative of each of said mechanical components and of said at least one first operation;
   determining (208), starting from said first number of ignitions and from said reference data ($T_{p, i}$), target operating life data ($Tv_{t, i}$) for each of said mechanical components; and
   comparing (210) said second variable data and said target operating life data for each of said mechanical components, wherein the present method further comprises the step of:

   determining that, if said second variable data and said target operating life data are comparable within a confidence interval, said second variable data and said first data history are correct;
   or the steps of:

   determining that, if said second variable data and said target operating life data are not comparable within said confidence interval, said second variable data and said first data history present an error; and
   overwriting (212) said second variable data with said target operating life data in said first data history of said ground logistic-support system, GLSS.

2. The method according to Claim 1, wherein said set of operations is carried out at least once.

3. The method according to Claim 1, wherein said reference data ($T_{p, i}$) are average life data for each of said mechanical components ($C_i$, $C_1$-$C_5$, $C_{S1}$-$C_{S5}$).

4. The method according to Claim 3, wherein said data of target life ($Tv_{t,\,i}$) are determined as product of said first number of ignitions ($N$, $N_a$, $N_t$, $N_e$) and said reference data ($T_{p,\,i}$).

5. The method according to Claim 1, wherein, prior to said step of receiving said first identifying data ($S/N_i$, $P/N_j$, $N_{Cmax,\,i}$, $Tv_{0,\,i}$, $Tv_{i,\,a}$), the method further comprises the steps of:

   storing (30), in said portable memory device, PMDS, (20), said fixed data ($S/N_i$, $P/N_j$, $N_{Cmax,\,i}$, $Tv_{0,\,i}$) regarding said mechanical components ($C_i$, $C_1$-$C_5$, $C_{S1}$-$C_{S5}$);
   sending (40), from said portable memory device, PMDS, said fixed data to said on-board computer, OBC, (8); and
   storing in said system subject to fatigue said fixed data that have been sent.

6. The method according to Claim 5, wherein said system subject to fatigue is configured to carry out a second set of operations comprising the steps of:

   carrying out (50) at least one second operating session, said at least one second operating session comprising at least one second operation;
   determining, following said at least one second operating session, said first identifying data ($S/Ni$, $P/N_j$, $N_{Cmax,\,i}$, $Tv_{0,\,i}$, $Tv_{i,\,a}$);
   determining a second number of ignitions ($N$, $N_a$, $N_t$, $N_e$) indicative of said at least one second operating session; and
   storing (60) said first identifying data and said second number of ignitions in said system subject to fatigue.

7. The method according to Claim 6, wherein said method further comprises the steps of:

   sending said first identifying data and said second number of ignitions to said portable memory device, PMDS, from said on-board computer, OBC, (8);
   storing said first identifying data and said second number of ignitions in said portable memory device, PMDS;
   sending (70), starting from said portable memory device, PMDS, said first identifying data ($S/N_i$, $P/N_j$, $N_{Cmax,\,i}$, $Tv_{0,\,i}$, $Tv_{i,\,a}$) and said second number of ignitions ($N$, $N_a$, $N_t$, $N_e$) to said ground logistic-support system , GLSS, (3); and
   storing said first identifying data and said second number of ignitions in said ground logistic-support system, GLSS, so as to determine a second data history.

8. The method according to Claim 7, wherein said first number of ignitions comprises said second number of ignitions.

9. The method according to Claim 7, wherein said first data history of said ground logistic-support system, GLSS, (3) comprises said second data history.

10. The method according to any one of the preceding claims, wherein said system subject to fatigue (5) is an aircraft.

11. The method according to any one of the preceding claims, wherein said mechanical components ($C_i$, $C_1$-$C_5$, $C_{S1}$-$Css$) are rotary mechanical components.

12. The method according to Claim 11, wherein said mechanical components ($C_i$, $C_1$-$C_5$, $C_{S1}$-$C_{S5}$) are air-turbine starting motors, ATSMs, and gearboxes, GBs.


**Patentansprüche**

1. Verfahren zur Überprüfung der Integrität von Betriebslebensdauerdaten mechanischer Komponenten ($C_i$, $C_1$-$C_5$, $Ssi$-$Css$) eines Systems (5), das Ermüdung ausgesetzt ist, wobei das Ermüdung ausgesetzte Objekt einen Computer an Bord, OBC, (8), der konfiguriert ist, um die mechanischen Komponenten zu steuern, aufweist, wobei das Ermüdung ausgesetzte Objekt konfiguriert ist, um einen Satz von Betrieben auszuführen, der die folgenden Schritte aufweist:

   Empfangen (80) erster Identifizierungsdaten ($S/N_i$, $P/N_j$, $N_{Cmax,\,i}$, $T_{Vi,\,a}$), die jede der mechanischen Komponenten des Ermüdung ausgesetzten Systems betreffen, von einer tragbaren Speichervorrichtung, PMDS - Portable Maintenance Data Storage, (20), die mit dem Computer an Bord, OBC, gekoppelt werden kann, wobei die ersten Identifizierungsdaten feste Daten (S/N$_i$, P/N$_j$, N$_{Cmax, i}$, T$_{V0, a}$) und erste variable Daten (T$_{Vi, a}$) aufweisen, wobei die festen Daten zu den ersten variablen Daten gehören und maximale Lebensdauerdaten (N$_{Cmax, i}$) aufweisen;

Ausführen (90) wenigstens einer Betriebssitzung, wobei die wenigstens eine Betriebssitzung wenigstens einen ersten Betrieb aufweist;

Bestimmen einer ersten Anzahl von Zündungen (N, N$_a$, N$_t$, N$_e$), welche die wenigstens eine erste Betriebssitzung anzeigt;

beginnend ab der wenigstens einen ersten Betriebssitzung, Bestimmen zweiter Identifizierungsdaten (S/N$_i$, P/N$_j$, N$_{Cmax, i}$, T$_{vi, b}$), die jede der mechanischen Komponenten des Ermüdung ausgesetzten Systems betreffen, wobei die zweiten Identifizierungsdaten die festen Daten und die zweiten variablen Daten (T$_{Vi, b}$), die anschließend an die wenigstens eine erste Betriebssitzung bestimmt werden, aufweisen; und

Senden (100) der zweiten Identifizierungsdaten und der ersten Anzahl von Zündungen an die tragbare Speichervorrichtung, PMDS, (20) von dem Computer an Bord, OBC,

wobei das Verfahren die folgenden Schritte aufweist:

Senden (110) der zweiten Identifizierungsdaten und der ersten Anzahl von Zündungen von der tragbaren Speichervorrichtung, PMDS, die mit einem Boden-Logistikunterstützungssystem, GLSS, gekoppelt werden kann, an das Boden-Logistikunterstützungssystem, GLSS, (3), wobei das Boden-Logistikunterstützungssystem, GLSS, die ersten Identifizierungsdaten aufweist;

beginnend mit den zweiten Identifizierungsdaten, Speichern der zweiten variablen Daten und der ersten Anzahl von Zündungen in dem Boden-Logistikunterstützungssystem, GLSS, um einen ersten Datenverlauf zu bestimmen; und

Bestimmen, dass der erste Datenverlauf einen Fehler darstellt, wenn die zweiten variablen Daten höher als die maximalen Lebensdauerdaten sind,

wobei das Verfahren **dadurch gekennzeichnet ist, dass** es die folgenden Schritte aufweist:

beginnend bei dem Boden-Logistikunterstützungssystem, GLSS, (3) Dekodieren (200) des ersten Datenverlaufs, der die mechanischen Komponenten betrifft;

beginnend mit dem ersten dekodierten Datenverlauf und für jede der mechanischen Komponenten, Erlangen (202) der zweiten variablen Daten;

beginnend bei dem Boden-Logistikunterstützungssystem, GLSS, Erlangen (204) der ersten Anzahl von Zündungen;

Bestimmen von Referenzdaten (T$_{p, i}$), die jede der mechanischen Komponenten und den wenigstens einen ersten Betrieb anzeigen;

beginnend mit der ersten Anzahl von Zündungen und ab den Referenzdaten (T$_{p, i}$), Bestimmen (208) von Zielbetriebslebensdauerdaten (T$_{Vt, i}$) für jede der mechanischen Komponenten; und

Vergleichen (210) der zweiten variablen Daten und der Zielbetriebslebensdauerdaten für jede der mechanischen Komponenten, wobei das vorliegende Verfahren ferner den folgenden Schritt aufweist:

Bestimmen, dass die zweiten variablen Daten und der erste Datenverlauf korrekt sind, wenn die zweiten variablen Daten und die Zielbetriebslebensdauerdaten innerhalb eines Konfidenzintervalls vergleichbar sind;

oder die folgenden Schritte aufweist:

Bestimmen, dass die zweiten variablen Daten und der erste Datenverlauf einen Fehler darstellen, wenn die zweiten variablen Daten und die Zielbetriebslebensdauer innerhalb des Konfidenzintervalls nicht vergleichbar sind; und

Überschreiben (212) der zweiten variablen Daten mit den Zielbetriebslebensdauerdaten in dem ersten Datenverlauf des Boden-Logistikunterstützungssystems, GLSS.

2. Verfahren nach Anspruch 1, wobei der Satz von Betrieben wenigstens einmal ausgeführt wird.

3. Verfahren nach Anspruch 1, wobei die Referenzdaten (T$_{p, i}$) mittlere Lebensdauerdaten für jede der mechanischen Komponenten (C$_i$, C$_1$-C$_5$, Csi-Css) sind.

4. Verfahren nach Anspruch 3, wobei die Daten der Ziellebensdauer (T$_{Vt, i}$) als Produkt der ersten Anzahl von Zündungen (N, N$_a$, N$_t$, N$_e$) und der Referenzdaten (T$_{p, i}$) bestimmt werden.

**5.** Verfahren nach Anspruch 1, wobei das Verfahren vor dem Schritt des Empfangens der ersten Identifizierungsdaten ($S/N_i$, $P/N_j$, $N_{Cmax, i}$, $T_{V0, i}$, $T_{Vi, a}$) ferner die folgenden Schritte aufweist:

Speichern (30) der festen Daten ($S/N_i$, $P/N_j$, $N_{Cmax, i}$, $T_{V0, i}$), welche die mechanischen Komponenten ($C_i$, $C_1$-$C_5$, Csi-Css) betreffen, in der tragbaren Speichervorrichtung, PMDS, (20);
Senden (40) der festen Daten von der tragbaren Speichervorrichtung, PMDS, an den Computer an Bord, OBC, (8); und
Speichern der gesendeten festen Daten in dem Ermüdung ausgesetzten System.

**6.** Verfahren nach Anspruch 5, wobei das Ermüdung ausgesetzte System konfiguriert ist, um einen zweiten Satz von Betrieben auszuführen, der die folgenden Schritte aufweist:

Ausführen (50) wenigstens einer zweiten Betriebssitzung, wobei die wenigstens eine zweite Betriebssitzung wenigstens einen zweiten Betrieb aufweist;
anschließend an die wenigstens eine zweite Betriebssitzung, Bestimmen der ersten Identifizierungsdaten ($S/N_i$, $P/N_j$, $N_{Cmax, i}$, $T_{V0, i}$, $T_{Vi, a}$);
Bestimmen einer zweiten Anzahl von Zündungen ($N$, $N_a$, $N_t$, $N_e$), die wenigstens eine zweite Betriebssitzung anzeigt; und
Speichern (60) der ersten Identifizierungsdaten und der zweiten Anzahl von Zündungen in dem Ermüdung ausgesetzten System.

**7.** Verfahren nach Anspruch 6, wobei das Verfahren ferner die folgenden Schritte aufweist:

Senden der ersten Identifizierungsdaten und der zweiten Anzahl von Zündungen von dem Computer an Bord, OBC, (8), an die tragbare Speichervorrichtung, PMDS;
Speichern der ersten Identifizierungsdaten und der zweiten Anzahl von Zündungen in der tragbaren Speichervorrichtung, PMDS;
beginnend bei der ersten tragbaren Speichervorrichtung, PMDS, Senden (70) der ersten Identifizierungsdaten ($S/N_i$, $P/N_j$, $N_{Cmax, i}$, $T_{V0, i}$, $T_{Vi, a}$) und der zweiten Anzahl von Zündungen ($N$, $N_a$, $N_t$, $N_e$) an das Boden-Logistikunterstützungssystem, GLSS, (3); und
Speichern der ersten Identifizierungsdaten und der zweiten Anzahl von Zündungen in dem Boden-Logistikunterstützungssystem, GLSS, um einen zweiten Datenverlauf zu bestimmen.

**8.** Verfahren nach Anspruch 7, wobei die erste Anzahl von Zündungen die zweite Anzahl von Zündungen aufweist.

**9.** Verfahren nach Anspruch 7, wobei der erste Datenverlauf des Boden-Logistikunterstützungssystems, GLSS, (3) den zweiten Datenverlauf aufweist.

**10.** Verfahren nach einem der vorhergehenden Ansprüche, wobei das Ermüdung ausgesetzte System (5) ein Flugzeug ist.

**11.** Verfahren nach einem der vorhergehenden Ansprüche, wobei die mechanischen Komponenten ($C_i$, $C_1$-$C_5$, Csi-Css) sich drehende mechanische Komponenten sind.

**12.** Verfahren nach Anspruch 11, wobei die mechanischen Komponenten ($C_i$, $C_1$-$C_5$, Csi-Css) Luftturbinen-Startmotoren, ATSMs, und Getriebe, GBs, sind.

**Revendications**

**1.** Procédé de vérification de l'intégrité de données de durée utile de composants mécaniques ($C_i$, $C_1$-$C_5$, $C_{S1}$-$C_{S5}$) d'un système soumis à la fatigue (5), ledit système soumis à la fatigue comprenant un ordinateur embarqué, OBC, (8), configuré pour commander lesdits composants mécaniques, ledit système soumis à la fatigue étant configuré pour effectuer un ensemble d'opérations comprenant les étapes consistant à :

recevoir (80), d'un dispositif de mémoire portable PMDS, (pour *Portable Maintenance Data Storage,* stockage portable de données de maintenance) (20), qui peut être couplé à l'ordinateur embarqué, OBC, des premières données d'identification ($S/N_i$, $P/N_j$, $N_{Cmax, i}$ $Tv_{i, a}$) relatives à chacun desdits composants mécaniques du système soumis à la fatigue, dans lequel lesdites premières données d'identification comprennent des données fixes (S/N$_i$, P/N$_j$, N$_{Cmax, i}$, Tv$_{0, i}$) et des premières données variables (Tv$_{i, a}$), lesdites données fixes étant associées auxdites premières données variables et comprenant des données de durée de vie maximale (N$_{Cmax, i}$) ;

effectuer (90) au moins une première session de fonctionnement, ladite au moins une session de fonctionnement comprenant au moins une première opération ;

déterminer un premier nombre d'allumages (N, N$_a$, N$_t$, N$_e$) indicatif de ladite au moins une première session de fonctionnement ;

déterminer, à partir de ladite au moins une première session de fonctionnement, des deuxièmes données d'identification (S/N$_i$, P/N$_j$, N$_{Cmax, i}$, T$_{Vi, b}$) relatives à chacun desdits composants mécaniques du système soumis à la fatigue, lesdites deuxièmes données d'identification comprenant lesdites données fixes et des deuxièmes données variables (T$_{Vi, b}$) déterminées à la suite de ladite au moins une première session de fonctionnement ; et

envoyer (100) lesdites deuxièmes données d'identification et ledit premier nombre d'allumages audit dispositif de mémoire portable, PMDS, (20) depuis ledit ordinateur embarqué, OBC,

le procédé comprenant les étapes consistant à :

envoyer (110) lesdites deuxièmes données d'identification et ledit premier nombre d'allumages à un système de support logistique au sol, GLSS, (3) depuis ledit dispositif de mémoire portable, PMDS, qui peut être couplé audit système de support logistique au sol, GLSS, ledit système de support logistique au sol, GLSS, comprenant lesdites premières données d'identification ;

stocker (120), à partir desdites deuxièmes données d'identification, lesdites deuxièmes données variables et ledit premier nombre d'allumages dans ledit système de support logistique au sol, GLSS, de manière à déterminer un premier historique de données ; et

si lesdites deuxièmes données variables sont supérieures auxdites données de durée de vie maximale, déterminer que ledit premier historique de données présente une erreur,

le procédé étant **caractérisé en ce qu'**il comprend les étapes consistant à :

décoder (200), à partir dudit système de support logistique au sol, GLSS, (3), ledit premier historique de données concernant lesdits composants mécaniques ;

acquérir (202), à partir dudit premier historique de données décodé et pour chacun desdits composants mécaniques, lesdites deuxièmes données variables ;

acquérir (204), à partir dudit système de support logistique au sol, GLSS, ledit premier nombre d'allumages ;

déterminer des données de référence (T$_{p, i}$), indicatives de chacun desdits composants mécaniques et de ladite au moins une première opération ;

déterminer (208), à partir dudit premier nombre d'allumages et à partir desdites données de référence (T$_{p, i}$), des données de durée utile cible (T$_{Vt, i}$) pour chacun desdits composants mécaniques ; et

comparer (210) lesdites deuxièmes données variables et lesdites données de durée utile cible pour chacun desdits composants mécaniques,

dans lequel le présent procédé comprend en outre l'étape consistant à :

si lesdites deuxièmes données variables et lesdites données de durée utile cible sont comparables dans un intervalle de confiance, déterminer que lesdites deuxièmes données variables et ledit premier historique de données sont corrects ;

ou les étapes consistant à :

si lesdites deuxièmes données variables et lesdites données de durée utile cible ne sont pas comparables dans ledit intervalle de confiance, déterminer que lesdites deuxièmes données variables et ledit premier historique de données présentent une erreur ; et

écraser (212) lesdites deuxièmes données variables par lesdites données de durée utile cible dans ledit premier historique de données dudit système de support logistique au sol, GLSS.

2. Procédé selon la revendication 1, dans lequel ledit ensemble d'opérations est effectué au moins une fois.

3. Procédé selon la revendication 1, dans lequel lesdites données de référence (T$_{p, i}$) sont des données de durée de vie moyenne pour chacun desdits composants mécaniques (Ci, C$_1$-C$_5$, C$_{S1}$-C$_{S5}$).

4. Procédé selon la revendication 3, dans lequel lesdites données de durée de vie cible (T$_{Vt, i}$) sont déterminées comme le produit dudit premier nombre d'allumages (N, $N_a$, $N_t$, $N_e$) et desdites données de référence ($T_{p,\,i}$).

5. Procédé selon la revendication 1, dans lequel, avant ladite étape consistant à recevoir lesdites premières données d'identification (S/$N_i$, P/$N_j$, $N_{Cmax,\,i}$, $Tv_{0,\,i}$, $Tv_{i,\,a}$), le procédé comprend en outre les étapes consistant à :

   stocker (30), dans ledit dispositif de mémoire portable, PMDS, (20), lesdites données fixes (S/$N_i$, P/$N_j$, $N_{Cmax,\,i}$, $Tv_{0,\,i}$) concernant lesdits composants mécaniques ($C_i$, $C_1$-$C_5$, $C_{S1}$-$C_{S5}$) ;
   envoyer (40) lesdites données fixes audit ordinateur embarqué, OBC, (8) depuis ledit dispositif de mémoire portable, PMDS ; et
   stocker dans ledit système soumis à la fatigue lesdites données fixes qui ont été envoyées.

6. Procédé selon la revendication 5, dans lequel ledit système soumis à la fatigue est configuré pour effectuer un deuxième ensemble d'opérations comprenant les étapes consistant à :

   effectuer (50) au moins une deuxième session de fonctionnement, ladite au moins une deuxième session de fonctionnement comprenant au moins une deuxième opération ;
   déterminer, à la suite de ladite au moins une deuxième session de fonctionnement, lesdites premières données d'identification (S/$N_i$, P/$N_j$, $N_{Cmax,\,i}$, $Tv_{0,\,i}$, $Tv_{i,\,a}$) ;
   déterminer un deuxième nombre d'allumages (N, $N_a$, $N_t$, $N_e$) indicatif de ladite au moins une deuxième session de fonctionnement ; et
   stocker (60) lesdites premières données d'identification et ledit deuxième nombre d'allumages dans ledit système soumis à la fatigue.

7. Procédé selon la revendication 6, dans lequel ledit procédé comprend en outre les étapes consistant à :

   envoyer lesdites premières données d'identification et ledit deuxième nombre d'allumages audit dispositif de mémoire portable, PMDS, depuis ledit ordinateur embarqué, OBC, (8) ;
   stocker lesdites premières données d'identification et ledit deuxième nombre d'allumages dans ledit dispositif de mémoire portable, PMDS ;
   envoyer (70) lesdites premières données d'identification (S/$N_i$, P/$N_j$, $N_{Cmax,\,i}$, $Tv_{0,\,i}$, $Tv_{i,\,a}$) et ledit deuxième nombre d'allumages (N, $N_a$, $N_t$, $N_e$) audit système de support logistique au sol, GLSS, (3) depuis ledit dispositif de mémoire portable, PMDS ; et
   stocker lesdites premières données d'identification et ledit deuxième nombre d'allumages dans ledit système de support logistique au sol, GLSS, de manière à déterminer un deuxième historique de données.

8. Procédé selon la revendication 7, dans lequel ledit premier nombre d'allumages comprend ledit deuxième nombre d'allumages.

9. Procédé selon la revendication 7, dans lequel ledit premier historique de données dudit système de support logistique au sol, GLSS, (3) comprend ledit deuxième historique de données.

10. Procédé selon l'une quelconque des revendications précédentes, dans lequel ledit système soumis à la fatigue (5) est un aéronef.

11. Procédé selon l'une quelconque des revendications précédentes, dans lequel lesdits composants mécaniques ($C_i$, $C_1$-$C_5$, $C_{S1}$-$C_{S5}$) sont des composants mécaniques rotatifs.

12. Procédé selon la revendication 11, dans lequel lesdits composants mécaniques ($C_i$, $C_1$-$C_5$, $C_{S1}$-$C_{S5}$) sont des moteurs de démarrage de turbines à air, ATSM, et des boîtes de vitesses, GB.

FIG. 1

EP 3 683 642 B1

```
        START

INSERTION OF IDENTIFYING          30
DATA IN PMDS

TRANSMISSION
OF IDENTIFYING DATA               40
FROM PMDS TO OBC

GROUND TESTS
OF THE AIRCRAFT                   50

UPDATING OF OPERATING
LIFE DATA IN PMDS                 60

         END
```

**FIG. 2**

```
        START

INSERTION OF INITIAL DATA         70
INTO GLSS FROM PMDS

TRANSMISSION OF INITIAL
DATA Tv_{i,a} FROM PMDS TO OBC    80

FLIGHT SESSION
OF THE AIRCRAFT                   90

UPDATING OF INITIAL DATA
WITH UPDATED DATA IN PMDS         100

TRANSMISSION OF UPDATED
DATA FROM PMDS TO GLSS            110

UPDATING OF FLIGHT
CONFIGURATION MODULE OF GLSS      120

         END
```

**FIG. 3**

| $P/N_j$ | $S/N_i$ | $Tv_{0,i}$ | $N_{cmax,i}$ |
|---|---|---|---|
| $P/N_1$ | $S/N_1$ | $Tv_{0,1}$ | $N_{cmax,1}$ |
| | $S/N_2$ | $Tv_{0,2}$ | $N_{cmax,2}$ |
| $P/N_2$ | $S/N_3$ | $Tv_{0,3}$ | $N_{cmax,3}$ |
| $P/N_3$ | $S/N_4$ | $Tv_{0,4}$ | $N_{cmax,4}$ |
| | $S/N_5$ | $Tv_{0,5}$ | $N_{cmax,5}$ |

## FIG. 4A

| $P/N_j$ | $S/N_i$ | $Tv_{0,i}$ | $N_{cmax,i}$ | $Tv_{i,a}$ |
|---|---|---|---|---|
| $P/N_1$ | $S/N_1$ | $Tv_{0,1}$ | $N_{cmax,1}$ | $Tv_{1,a}$ |
| | $S/N_2$ | $Tv_{0,2}$ | $N_{cmax,2}$ | $Tv_{2,a}$ |
| $P/N_2$ | $S/N_3$ | $Tv_{0,3}$ | $N_{cmax,3}$ | $Tv_{3,a}$ |
| $P/N_3$ | $S/N_4$ | $Tv_{0,4}$ | $N_{cmax,4}$ | $Tv_{4,a}$ |
| | $S/N_5$ | $Tv_{0,5}$ | $N_{cmax,5}$ | $Tv_{5,a}$ |

## FIG. 4B

START → REPLACEMENT OF ROTARY MECHANICAL COMPONENT $C_i$ (130) → INSERTION OF MAINTENANCE DATA IN GLSS (140) → UPDATING OF PMDS DATA (150) → END

**FIG. 5**

| P/N | S/N | $Tv_{0,i}$ | $N_{cmax,i}$ | $Tv_{i,a}$ | $Tv_{i,b}$ |
|---|---|---|---|---|---|
| $P/N_i$ | $S/N_i$ | $Tv_{0,i}$ | $N_{cmax,i}$ | $Tv_{i,a}$ | $Tv_{i,b}$ |
| $P/N_1$ | $S/N_1$ | $Tv_{0,1}$ | $N_{cmax,1}$ | $Tv_{1,a}$ | $Tv_{1,b}$ |
| | $S/N_2$ | $Tv_{0,2}$ | $N_{cmax,2}$ | $Tv_{2,a}$ | $Tv_{2,b}$ |
| $P/N_2$ | $S/N_3$ | $Tv_{0,3}$ | $N_{cmax,3}$ | $Tv_{3,a}$ | $Tv_{3,b}$ |
| $P/N_3$ | $S/N_4$ | $Tv_{0,4}$ | $N_{cmax,4}$ | $Tv_{4,a}$ | $Tv_{4,b}$ |
| | $S/N_5$ | $Tv_{0,5}$ | $N_{cmax,5}$ | $Tv_{5,a}$ | $Tv_{5,b}$ |

**FIG. 4C**

19

**FIG. 6**

| $P/N_j$ | $S/N_{i/S_i}$ | $Tv_{0,i/S_i}$ | $N_{cmax, i/S_i}$ |
|---|---|---|---|
| $P/N_1$ | $S/N_{S_1}$ | $Tv_{0,S_1}$ | $N_{cmax, S_1}$ |
|  | $S/N_2$ | $Tv_{0,2}$ | $N_{cmax, 2}$ |
| $P/N_2$ | $S/N_3$ | $Tv_{0,3}$ | $N_{cmax, 3}$ |
| $P/N_3$ | $S/N_4$ | $Tv_{0,4}$ | $N_{cmax, 4}$ |
|  | $S/N_5$ | $Tv_{0,5}$ | $N_{cmax, 5}$ |

# FIG. 7

**FIG. 8**

**EP 3 683 642 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102019000000617
- US 9260200 B1
- US 2009306909 A1